# EUROPEAN PATENT APPLICATION

(11) **EP 2 103 419 A1**
(43) Date of publication of application: **23.09.2009**
(21) Application number: 09002565.1
(22) Date of filing: 24.02.2009
(51) Int. Cl.: B29D 29/06, B29C 35/02, B29C 39/10

(54) **A process for constructing an improved conveyor belt and an apparatus for the execution thereof**

(30) Priority: 21.03.2008 IT mi20080488
(71) Applicant: INDUSTRIE TESSILI BRESCIANE S.p.A., 22046 Merone (CO) (IT)
(72) Inventor: Bertotto, Serafino, 22100 Como (CO) (IT)
(74) Representative: Lecce, Giovanni

(57) **Abstract**

A process for constructing an improved conveyor belt (10, 10', 10"), with closed path and defined by one or more layers of fabric arranged relative to a layer or lower layer (14) of silicone especially suitable for being used in the textile industry, and in particular for the compaction or pre-shrinkage process, with said process consisting in a step of arranging said one or more layers inside a mould (26), a step of filling the mould (26) with silicone material, a step of curing subsequent to the filling of the mould (26), a step of extraction of the conveyor belt (10, 10', 10"), an optional step of grinding of the silicone surface of the conveyor belt, an optional step of upturning of the conveyor belt (10, 10', 10").

## Description

### Technical Field

This invention relates to a process for constructing an improved conveyor belt and an apparatus for the execution thereof.

More in particular, this invention relates to a process for constructing an improved conveyor belt and to an apparatus for the execution thereof, with said conveyor belt especially suitable for being used in the textile industry and in particular, but not exclusively, for carrying out the compaction or pre-shrinkage process, that is, the treatment the target whereof is the shrinkage, in particular, of cotton jersey fabrics optionally mixed with other natural vegetal, animal or artificial cellulose fibres, for obtaining a dimensional stability to a suitable extent for ensuring said stability in the manufactured items that will subsequently be subjected to repeated washes for obtaining the end product.

### Background Art

The compaction of jersey fabric is carried out in a dedicated machine that comprises a heated cylinder, an elastic tubular conveyor belt or tape set in rotation by a plurality of tightening cylinders controlled by tension regulators. The belt slides, with a contact arc higher than 180°, between the rubber belt and the heated cylinder that along with a steam humidifier, has the function of blocking the fabric compaction.

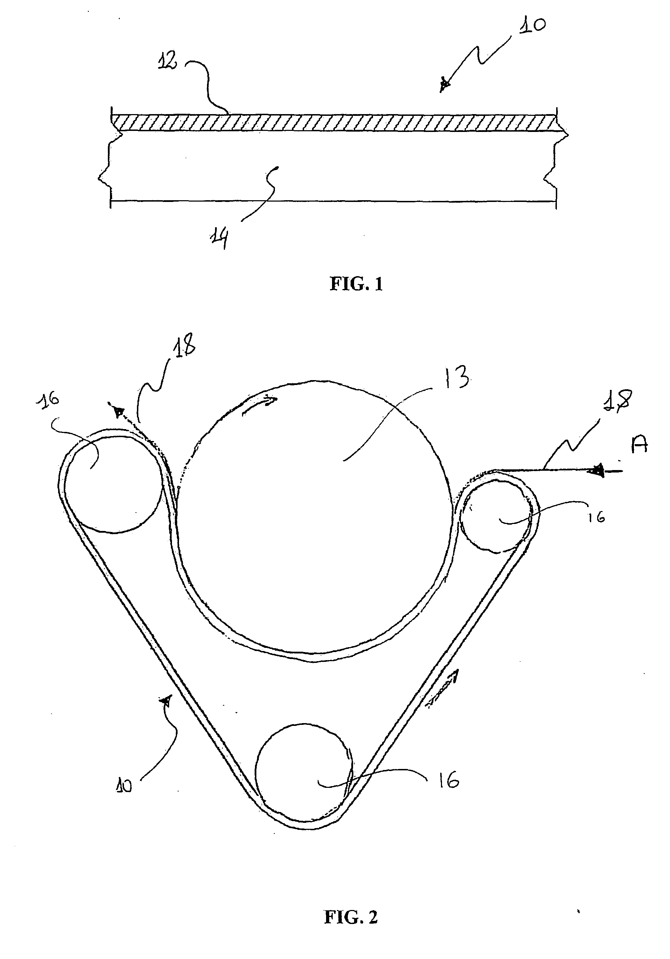

The function of the roller wherein the jersey fabric to be treated enters, moved by the conveyor belt, is important. The conveyor belt should extend easily on the outer side (see figure 2 that schematically shows a pre-shrinkage machine), when it wraps us the inlet roller of the jersey fabric (indicated with arrow A in figure 2) and it should shrink when it wraps up the hot cylinder (in the concave position); the greater the capacity of the conveyor belt to extend and shrink, the greater the capacity of the fabric to shrink or compact. In order to achieve these results, there is a tendency to reduce the diameter of the inlet cylinder (at arrow A of figure 2) and increase the thickness of the conveyor belt.

The fabric compaction takes place in the zone where the conveyor belt switches from the convex position to the concave position.

The conveyor belt traditionally used for the compaction process or treatment is defined by a felt, generally composed of a carrying base of non elastic fabric whereon webs of synthetic fibres, generally aramidic, polyester, acrylic and the like, are laid, with said webs that are inserted in the carrying base by a needling process. Only such layer of needling fibres extends and shrinks, allowing the compaction of the jersey fabric; on the contrary, since the underlying carrying base or layer is of non elastic fabric, it is non-deformable.

Such traditional conveyor belt has a structure characterised by low elasticity and this causes a somewhat reduced shrinkage of the jersey fabric subject to the process; such drawback reflects on the forming of cracks and corrugations on the working surface of the top felt layer of the conveyor belt that cause the forming of creases on the jersey fabric that cause the so-called "elephant skin" effect.

Conveyor belts entirely made of silicone material do not allow obviating this drawback; in fact, while silicone is highly elastic, it has a very high static and dynamic friction coefficient and this does not allow, or rather hinders, a sliding or slipping of the fabric or textile sub-layer relative to the tape, thus preventing the compaction of the fabric itself.

Moreover, the traditional techniques for making a conveyor belt with closed path of silicone and with an outer working surface of elastic fabric, require an operation for spreading the silicone on an elastic ring rotating on two cylinders parallel to each other. Based on such technique, if the base is elastic, the tension for rotating said base on the above cylinders, along with the weight of the silicone layers progressively applied, causes an elongation of the base and a considerable loss of the original elasticity. Moreover, considering that such process is carried out applying subsequent and overlapping layers of silicone until a thickness comprised between 10 and 20 mm is reached, the resulting conveyor belt often has delamination problems.

### Description

The object of this invention is to obviate the drawbacks discussed hereinabove.

More in particular, the object of this invention is to provide a conveyor belt with a high elasticity such as to allow a high and optimum percentage of longitudinal shrinkage of the treated fabric without flaws such as creases and/or elephant skin effects.

A further object of this invention is to provide a process and the related apparatus for constructing a conveyor belt the structure whereof should not undergo tensioning during the construction step.

A further object of this invention is to provide the users with an improved conveyor belt suitable for ensuring a high level of resistance and reliability over time, and also such as to be easily and inexpensively constructed.

These and other objects are achieved by the process for constructing an improved conveyor belt and by the apparatus for the execution thereof, with said process that comprises a step of arranging, relative to a mould, one or more layers of fabric, arranged relative to a layer or lower layer of silicone and defining the structure of the conveyor belt, a step of filling said mould with silicone material, a step of curing subsequent to the filling of the mould, a step of extraction of the resulting conveyor belt, an optional step of grinding the silicone surface of the conveyor belt and an optional step of upturning the conveyor belt thus obtained.

### Brief Description of Drawings

The construction and functional features of the process for constructing an improved conveyor belt and the apparatus for the execution thereof, shall be better understood from the following detailed description, wherein reference is made to the annexed drawing tables showing a preferred and non-limiting embodiment thereof, and wherein:
figure 1 shows a schematic partial dissected view of the improved conveyor belt of this invention;
figure 2 shows a schematic front view of the conveyor belt of the invention slidingly arranged on a machine for carrying out the pre-shrinkage process;
figure 3 schematically shows a perspective view of the apparatus for carrying out the process for constructing the conveyor belt of the invention;
figures 4 and 5 schematically show a dissected view of the conveyor belt of the invention according to alternative embodiments.

### Disclosure of invention

With reference to the above figures, the improved conveyor belt of this invention, indicated with 10 at figures 1 and 2, is defined by a multiplayer structure that comprises at least one upper or outer layer 12 suitable for contacting a fabric or textile sub-layer 18, to be subjected to pre-shrinkage treatment, allowing the sliding thereof relative to a heated cylinder or drum 13 and by a lower or inner layer 14 suitable for contacting a plurality of cylinders 16 that have the function of allowing the sliding of the conveyor belt and of tensioning the same.

The lower or inner layer 14 is made of silicone material of the traditional type and is obtained according to the process and by the apparatus that shall be described hereinafter.

The upper layer or outer layer 12 is preferably made of elastic fabric, this is in order to prevent the lower layer 14 of silicone from contacting the textile sub-layer 18 to be subjected to pre-shrinkage process or treatment; as already said before, in fact, since silicone has a very high friction coefficient, it does not allow the textile sub-layer 18 to slide on the conveyor belt 10 of the invention when it slides, transported by the plurality of cylinders 16, on the heated drum 13 and thus prevents the compaction of the textile sub-layer itself.

Since the upper layer or outer layer 12 defines the working surface whereon the textile sub-layer 18 slides, it must be resistant to the wear due to the sliding of the conveyor belt and to the heat of the heated cylinder 13 (temperature between 120 and 180 °C) of the compacting or pre-shrinking machine.

Said upper layer 12 is preferably made of tubular fabric of fibres such as for example Elastan, Lycra or other similar elastomeric fibre.

The upper layer 12, moreover, may be protected with a further layer of aramidic fibres such as Nomex, Kevlar and the like, arranged by a traditional needling process for withstanding the high temperature of the hot cylinder 13 (the temperature reaches about 180 °C) and the friction with the fabric.

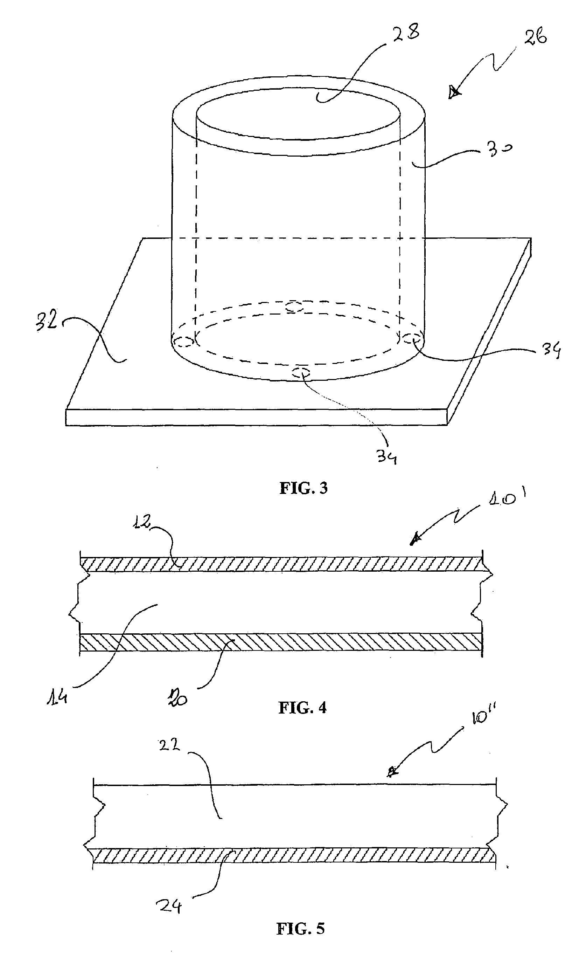

According to a first alternative embodiment, schematised at figure 4, the conveyor belt 10' is provided with a further layer 20 arranged underneath the lower layer 14. Said further layer 20 is made of elastic material like the upper layer 12 or of non elastic material; said non elastic material is defined by a fabric made of carded, combed yarns, multi-filaments or mono-filaments of synthetic fibres. The further layer 20 has the function of protecting the lower layer 14 and reducing the forming of static elasticity currents, that is, if non elastic material is used, of imparting higher mechanical elongation resistance to the conveyor belt.

According to an alternative embodiment, schematised at figure 5, the conveyor belt 10" is provided with an outer layer or upper layer 22, made of silicone material like the lower layer 14 of the conveyor belt 10, and a lower layer 24 made of non elastic material.

Such second alternative embodiment is particularly useful for applications other than pre-shrinkage or compaction, that is, for processes such as fixation, decatizing, crabbing and lamination of fabrics.

The conveyor belt described above in detail with reference to its construction features is made with a mould 26 schematised at figure 3, composed of two longitudinally extended tubes, concentric with basically circular section, an inner tube 28 and an outer tube 30 fixed in a known and removable manner, at one of the end bases, to a plate shaped base element 32. The height of the two concentric tubes, as well as the base diameter of the same, is selected on the basis of the dimensional features of the conveyor belt to be made.

The plate shaped base element 32, at the circular rim defined by the outer tube 30 and by the inner tube 28, has one or more holes 34 suitable for allowing the outlet of the silicone fluid according to the methods described hereinafter.

According to a first mode of carrying out the process of the invention, a fabric ring, preferably elastic, defining the outer layer or upper layer 12 of the conveyor belt 10, 10' and/or a further optional elastic or non elastic ring defining the lower layer 20, 24 of the conveyor belt 10', 10" is arranged by known means on the inner surface of the outer tube 30 and stabilised, at the bottom and below, relative to the same by means of one or more ring nuts or other known retaining means.

The silicone fluid is injected through holes 34 in the space comprised between the inner tube 28 and the outer tube 30, through a conventional pressure pump.

Said silicone fluid, going up through the two concentric tubes, pushes the elastic ring that defines the upper layer 12 or the lower layer 20, 24 against the inner surface of the outer tube 30. The structure of the elastic ring that defines the upper layer 12 is closed so as to prevent the silicone from crossing it, but to adhere and expand evenly along the surface of the elastic ring opposite that of contact with the inner surface of the outer tube 30.

According to a second mode of carrying out the process of the invention, the elastic ring defining the outer layer or upper layer 12 or the non elastic layer defining the lower layer 24 is fitted on the outer surface of the inner tube 28 and the silicone, injected through the holes 34, fills the space comprised between the inner tube 28 and the outer tube 20 pushing the elastic ring or the non elastic ring against the outer surface of the inner tube 28.

When the silicone fluid has filled the mould, that is, the space comprised between the inner tube 28 and the outer tube 30, a curing step is carried out at a temperature normally comprised between 120 and 160 °C.

At the end of such step, the conveyor belt 10, 10', 10" thus realised is removed from the mould; such operation may be facilitated, optionally covering the surface of the inner tube 28 and of the outer tube 30 with detaching fluids of known type.

The extraction step is carried out opening the outer tube 30 and extracting the conveyor belt, or in an alternative embodiment extracting the mould defined by the two concentric tubes relative to the formed conveyor belt.

The extraction step is facilitated by the fact that the outer surface of the inner tube 28 and the inner surface of the outer tube 30 are coated with Teflon or other plastic material with similar features.

If the upper layer 12 del of the conveyor belt 10 or the lower layer 24 of the conveyor belt 10" are in contact with the outer surface of the inner tube 28, after the extraction step it will be necessary to carry out an upturning of the tape, so as to have the upper layer 12 of the tape 10 or the lower layer 24 of the tape 10" facing outwards, that is, in the contact direction with the textile sub-layer. Moreover, before carrying out the upturning operation it is possible to carry out a step of grinding of the lower layer or inner layer 14 so as to ensure perfect thickness evenness of the tape.

As can be noticed from the above, the advantages achieved by this invention are clear.

The process of this invention and the apparatus for the execution thereof advantageously allow obtaining a dimensionally even conveyor belt by the entire length thereof and not subject to delamination.

A further advantage of the process of the invention is represented by the fact that it allows obtaining a conveyor belt not tensioned during the step of making of the tape itself.

A further advantage is the fact that the process and the apparatus of the invention allow the concurrent application of two elastic and/or non elastic rings on the inner surface and on the outer surface of the silicone layer.

A further advantage is the fact that the apparatus for the execution of the process of the invention allows reducing the operating time required for making the conveyor belt, this allows a concurrent reduction of the production costs.

A further advantage of the process of the invention is represented by the fact that it allows obtaining a conveyor belt with high quality features and such as to allow optimum processing of the fabric, with particular reference to the pre-shrinkage process, free from flaws such as creases and/or "elephant skin" effects.

Even if the invention has been described hereinbefore with particular reference to an embodiment/execution thereof made by way of a non-limiting example only, several changes and variations will appear clearly to a man skilled in the art in the light of the above description. This invention therefore is intended to include any changes and variations thereof falling within the spirit and the scope of the following claims.

## Claims

1. A process for constructing an improved conveyor belt (10, 10', 10"), with closed path and defined by one or more layers of fabric arranged relative to a layer or lower layer (14) of silicone, especially suitable for being used in the textile industry and in particular for the compaction or pre-shrinkage process, with said process **characterised in that** it consists of:
- a step of arranging said one or more layers inside a mould (26);
- a step of filling the mould (26) with silicone material;
- a step of curing subsequent to the filling of the mould (26);
- a step of extracting the conveyor belt (10, 10', 10");
- an optional step of grinding the silicone surface of the conveyor belt;
- an optional step of upturning the conveyor belt (10, 10', 10").

2. The process according to claim 1, **characterised in that** the one or more layers of fabric arranged inside the mould (26) are defined by tubular rings of fabric of elastic or non elastic material.

3. The process according to claim 1, **characterised in that** the mould (26) comprises an inner tube (28) and an outer tube (30) concentric to one another, longitudinally extended stabilised, at one of the ends, to a plate shaped base element (32) and removable relative to the same.

4. The process according to claim 2, **characterised in that** the fabric rings are arranged or fitted on the outer surface of the inner tube (28) and/or on the inner surface of the outer tube (30) of the mould (26).

5. The process according to claim 3, **characterised in that** the plate shaped base element (32), at the region comprised between the inner tube (28) and the outer tube (30), has one or more holes (34) suitable for allowing the outlet of the silicone fluid injected in the mould through an injection pump.

6. The process according to claim 3, **characterised in that** the outer surface of the inner tube (28) and the inner surface of the outer tube (30) of the mould (26) are coated with Teflon.

7. An improved conveyor belt (10, 10') with closed path obtained based on the process of the previous claims, **characterised in that** it comprises a multilayer structure composed of at least an upper or outer layer (12) and a lower or inner layer (14), the upper layer (12) made of elastic fibre or fabric and the lower layer (14) made of silicone material.

8. An improved conveyor belt (10") with closed path obtained based on the process of the previous claims, **characterised in that** it comprises a multilayer structure composed of an outer layer or upper layer (22), made of silicone material, and at least one lower layer (24) made of non elastic material.

9. The conveyor belt (10') according to claim 7, **characterised in that** it comprises a further layer (20) arranged underneath the lower layer (14) and made of elastic or non elastic material.

10. The conveyor belt (10,10') according to claim 7, **characterised in that** the upper layer (12) and the further layer (20) are made of Elastan, Lycra or other elastomer fibre.

11. The conveyor belt (10, 10') according to claim 7, **characterised in that** the upper layer (12) and the further layer (20) are made of Elastan, Lycra or other elastomer fibre.

12. The conveyor belt (10', 10") according to claims 7, 8 and 9,
**characterised in that** the further layer (20) and the lower layer (24) are made of carded, combed yarns, multi-filaments or mono-filaments of synthetic fibres.
